# EUROPÄISCHE PATENTANMELDUNG

(11) **EP 2 848 966 A1**
(43) Veröffentlichungstag der Anmeldung: **18.03.2015**
(21) Anmeldenummer: 14176328.4
(22) Anmeldetag: 09.07.2014
(51) Int. Cl.: G02B 3/00, G02B 19/00

(54) **Beleuchtungsvorrichtung und Verfahren zum Erzeugen eines Beleuchtungsfeldes**

(30) Priorität: 14.08.2013 DE 102013108800
(71) Anmelder: SICK AG, 79183 Waldkirch (DE)
(72) Erfinder: Schneider, Dr. Florian, 79276 Reute (DE)
(74) Vertreter: Ludewigt, Christoph

(57) **Zusammenfassung**

Es wird eine Beleuchtungsvorrichtung (10) zum Erzeugen eines Beleuchtungsfeldes (102) für einen optoelektronischen Sensor (100) angegeben, die mindestens eine Lichtquelle (12) und eine Beleuchtungsoptik (14) aufweist, insbesondere mit einer TIR-Linse (16), um das Licht der Lichtquelle (12) gezielt in das Beleuchtungsfeld (102) zu führen, wobei die Beleuchtungsoptik (10) einen Lichteintrittsbereich (20), einen Licht-führungsbereich (22) mit einer Mantelfläche (24) und einen Lichtaustrittsbereich (26) aufweist, so dass das Licht (28, 30) der Lichtquelle (12) in der Beleuchtungsoptik (14) über Totalreflexion an der Mantelfläche (24) von dem Lichteintrittsbereich (20) zu dem Lichtaustrittsbereich (26) geführt wird. Dabei weist die Beleuchtungsoptik (10) an dem Lichtaustrittsbereich (26) ein anpassbares optisches Strahlformungselement (18) auf, um die Lichtverteilung des abgestrahlten Lichts (28, 30) einzustellen. Das Strahlformungselement (18) weist mindestens ein elastisches Mikrolinsenfeld (32) mit elastisch verformbaren Mikrolinsen und ein Druckelement (26) auf, um die Mikrolinsen zusammenzupressen oder zu entlasten.

## Beschreibung

Die Erfindung betrifft eine Beleuchtungsvorrichtung und ein Verfahren zum Erzeugen eines Beleuchtungsfeldes nach dem Oberbegriff von Anspruch 1 beziehungsweise 12.

Für die Inspektion oder Vermessung von Objekten werden häufig Kamerasysteme eingesetzt. Dabei werden Bilder des Objekts erfasst und entsprechend der Aufgabe durch Bildverarbeitungsverfahren ausgewertet. Eine weitere Anwendung von Kameras ist das Lesen von Codes. Derartige kamerabasierte Codeleser lösen die noch weit verbreiteten Barcodescanner zunehmend ab. Mit Hilfe eines Bildsensors werden Objekte mit den darauf befindlichen Codes aufgenommen, in den Bildern die Codebereiche identifiziert und dann dekodiert. Kamerabasierte Codeleser kommen problemlos auch mit anderen Codearten als eindimensionalen Strichcodes zurecht, die wie ein Matrixcode auch zweidimensional aufgebaut sind und mehr Informationen zur Verfügung stellen.

Solche Kamerasysteme benötigen eine Beleuchtung, um die zu inspizierenden oder zu vermessenden Objekte beziehungsweise den zu lesenden Code unabhängig von Umgebungs- oder Fremdlicht erfassen zu können. Als Lichtquellen werden dabei häufig LEDs verwendet. Im Vergleich zu den ebenfalls gelegentlich verwendeten Laserlichtquellen haben LEDs meist eine divergentere Abstrahlcharakteristik und größere Abstrahlflächen. Um deren Licht dennoch gezielt auf das Beleuchtungsfeld zu führen, werden entsprechende Optiken verwendet.

Zur effizienten Projektion des Lichts sind im Stand der Technik sogenannte TIR-Linsen (Total Internal Reflection) bekannt. Eine TIR-Linse weist eine Geometrie auf, die dafür sorgt, dass das eingetretene Licht in hinreichend flachem Winkel auf die Seitenflächen fällt, um die für das Linsenmaterial geltenden Bedingungen für Totalreflexion zu erfüllen. Dadurch wird das Licht ähnlich wie in einem Lichtleiter geführt. Zusätzlich zu der bloßen Lichtweiterleitung hat aber aufgrund der Geometrie der TIR-Linse und insbesondere ihrer Mantelfläche das austretende Lichtbündel eine gewünschte Strahlform. TIR-Linsen werden beispielsweise in einem Spritzgussprozess hergestellt und mit einer LED-Lichtquelle zu einer Beleuchtung assembliert.

Die anfangs genannten Kamerasysteme werden in einer großen Variantenvielfalt gebraucht, die sich in der Auflösung des Bildsensors, aber auch in Sichtfeld und Arbeitsabstand differenzieren. Für eine effiziente Beleuchtung muss jeweils eine passende TIR-Linse mit geeignetem Beleuchtungsfeld eingesetzt werden. So sollen in einigen Anwendungen bei gegebenem Kamerasichtfeld maximale Arbeitsabstände erreicht werden. Bei schwierigen Oberflächeneigenschaften der erfassten Objekte hingegen, etwa Glanz oder Teiltransparenz, wird eher ein großer Überlappungsbereich von einzelnen Beleuchtungseinheiten benötigt. Somit muss für die Vielfalt an Anforderungen eine große Anzahl von TIR-Linsen vorgehalten werden, was einen entsprechenden Aufwand für die Entwicklung, Produktion, Lagerung und Verwaltung der optischen Komponenten verursacht. Eine Anpassung des Beleuchtungsfeldes im Feld ist ohne Austausch des Beleuchtungsmoduls nicht möglich.

Die DE 10 2008 014 349 B4 offenbart einen optischen Sensor mit einer Sendeoptik, in deren Konzentrator eine Lichtführung durch Totalreflexion an der Mantelfläche erfolgt. Aus der US 2006/0196944 A1 ist eine Beleuchtungsvorrichtung mit einer LEDLichtquelle und einer den Winkelbereich einstellenden Linse bekannt, an deren äußerer Mantelfläche das Licht durch Totalreflexion geführt wird. Die Problematik der fehlenden Anpassungsmöglichkeiten für das entstehende Beleuchtungsfeld wird aber im Stand der Technik nicht angesprochen.

Es ist daher Aufgabe der Erfindung, eine auf TIR-Linsen basierende oder vergleichbare Beleuchtungsoptik zu verbessern.

Diese Aufgabe wird durch eine Beleuchtungsvorrichtung und ein Verfahren zum Erzeugen eines Beleuchtungsfeldes nach Anspruch 1 beziehungsweise 11 gelöst. Dabei geht die Erfindung von dem Grundgedanken aus, das Licht einer Lichtquelle durch eine Beleuchtungsoptik, insbesondere TIR-Linse, zu führen, deren Geometrie so beschaffen ist, dass das durch einen Lichteintrittsbereich in der Beleuchtungsoptik befindliche Licht hinreichend flach von innen auf die Mantelflächen fällt und so durch Totalreflexion weitergeführt und strahlgeformt wird, ehe es durch eine Lichtaustrittsfläche in Richtung Beleuchtungsfeld projiziert wird. Um nun optische Eigenschaften und dadurch die Lichtverteilung in dem Beleuchtungsfeld, wie beispielsweise dessen Ausdehnung oder Lage, Helligkeit oder die Divergenz des projizierten Lichtbündels einzustellen, ist in der Beleuchtungsoptik der Lichtaustrittsfläche noch ein anpassbares optisches Strahlformungselement nachgeordnet, mit dem die Divergenz des abgestrahlten Lichts eingestellt werden kann, wobei die Einstellung dadurch erfolgt, dass das Strahlformungselement mindestens ein elastisches Mikrolinsenfeld mit elastisch verformbaren Mikrolinsen und ein Druckelement aufweist, um die Mikrolinsen zusammenzupressen oder zu entlasten.

Die Erfindung hat den Vorteil, dass die Variantenvielfalt und dadurch Aufwand in Entwicklung, Produktion und Verwaltung reduziert wird. Es werden Einstellungsmöglichkeiten der optischen Eigenschaften der Beleuchtungsvorrichtung im Feld durch den Kunden oder Service ohne Austausch der Beleuchtungsvorrichtung geschaffen.

Das Strahlformungselement weist mindestens ein elastisches Mikrolinsenfeld mit elastisch verformbaren Mikrolinsen und ein Druckelement auf, um die Mikrolinsen zusammenzupressen oder zu entlasten. Dadurch werden die optischen Eigenschaften der Mikrolinsen verändert, insbesondere deren Brennweite. Die beiden extremen Zustände sind quasi plattgedrückte, optisch nicht wirksame Mikrolinsen bei höchstem Druck und maximaler optischer Einfluss bei vollständiger Entlastung. Dadurch ist eine sehr einfache Einstellbarkeit erhalten.

Der Lichteintrittsbereich weist bevorzugt eine Ausnehmung auf, in der die Lichtquelle angeordnet ist. Die Lichtquelle kann dadurch praktisch ein Stück in die Beleuchtungsoptik hineingeschoben werden, wo dann der Lichteintrittsbereich die Lichtquelle in einem großen Winkelbereich umgibt. Dadurch nimmt die Beleuchtungsoptik das Licht der Lichtquelle über einen großen Winkelbereich Abstrahlwinkel auf. Auch für eine nicht kollimierte Lichtquelle mit divergenter Abstrahlcharakteristik, beispielsweise eine LED mit großer Abstrahlfläche beziehungsweise großem Abstrahlwinkel wird daher das abgestrahlte Licht gezielt in den Beleuchtungsbereich geführt.

Der Lichteintrittsbereich ist bevorzugt zumindest teilweise konvex ausgebildet. Dieser konvexe Teilbereich liegt noch bevorzugter im Zentrum. Dadurch wird ein innerer Teil des Lichts der Lichtquelle strahlgeformt, das direkt ohne Totalreflexion an der Mantelfläche zu dem Lichtaustrittsbereich gelangt.

Das Strahlformungselement weist bevorzugt mindestens zwei lateral zueinander relativ bewegliche Mikrolinsenfelder auf. Die laterale Richtung liegt dabei in einer Ebene quer zu der Projektionsrichtung der Beleuchtungsvorrichtung. Die Bewegung muss nicht ausschließlich lateral erfolgen, sondern kann auch eine Komponente in Projektionsrichtung umfassen. Durch die laterale Bewegung werden somit die Mikrolinsen innerhalb des Strahlquerschnitts des austretenden Lichts verschoben und beeinflussen je nach Stellung andere Teilstrahlquerschnitte. Durch Zusammenwirken von verschobenen Mikrolinsen der beiden Mikrolinsenfelder wird ein besonders großer Einfluss auf die Lichtverteilungseigenschaften erzielt.

In einer lateralen Anordnung der Mikrolinsenfelder liegen die Mikrolinsen des einen Mikrolinsenfeldes und die Mikrolinsen des anderen Mikrolinsenfeldes bevorzugt unmittelbar übereinander. Es wirken dadurch direkt übereinander liegend jeweils eine Mikrolinse des einen Mikrolinsenfeldes und eine Mikrolinse des anderen Mikrolinsenfeldes auf das projizierte Licht ein. Beispielsweise ist das ein Ausgangszustand, in dem sich die Effekte dieser beiden Mikrolinsen kompensieren, das Strahlformungselement demnach praktisch keine zusätzliche Auswirkung hat.

In einer weiteren lateralen Anordnung der Mikrolinsenfelder liegen die Mikrolinsen des einen Mikrolinsenfeldes und die Mikrolinsen des anderen Mikrolinsenfeldes bevorzugt versetzt zueinander. Dadurch bildet sich effektiv eine Matrixstruktur, in der alternierend die Mikrolinsen des einen Mikrolinsenfeldes und die Mikrolinsen des anderen Mikrolinsenfeldes angeordnet sind. Beispielsweise ergibt sich dadurch ein Zustand, in dem das austretende Licht erst von der einen und dann noch weiter von der zweiten Mikrolinse aufgestreut wird.

Ein Mikrolinsenfeld weist bevorzugt konkave Mikrolinsen und ein anderes Mikrolinsenfeld konvexe Mikrolinsen auf. Bei gleicher Mikrolinsendichte und zumindest ähnlichen Krümmungen können dann die konvexen Mikrolinsen in unterschiedlichem Grad in den konkaven Mikrolinsen angeordnet werden, damit sich deren Effekte wahlweise kompensieren oder verstärken.

Ein Mikrolinsenfeld ist bevorzugt ortsfest zu dem Lichtaustrittsbereich angeordnet und insbesondere einstückig damit ausgebildet. Die Lichtaustrittsfläche ist dabei vorzugsweise zunächst flach, nicht wie häufig im Stand der Technik konvex zur Strahlbündelung. Anstelle dieser konvexen Krümmung ist ein Mikrolinsenfeld vorgesehen. In einer besonders bevorzugten Ausführungsform wird das Mikrolinsenfeld in die Lichtaustrittsfläche strukturiert, also einstückig beispielsweise im gleichen Spritzgussprozess hergestellt.

Das Strahlformungselement weist bevorzugt ein diffraktives optisches Element (DOE) auf. Das DOE ist ebenfalls variabel, beispielsweise indem unterschiedliche Teilbereiche des DOE in den Strahlengang verschoben oder mehrere Teilelemente gegeneinander verschoben werden oder das DOE verformt wird.

In vorteilhafter Weiterbildung ist eine Kamera, insbesondere ein kamerabasierter Codeleser oder eine Kamera zur Inspektion oder Vermessung von Objekten, mit einem Bildsensor zur Aufnahme von Bilddaten, einer Auswertungseinheit zum Lesen von Codes oder Bestimmen von Objekteigenschaften aus den Bilddaten und einer erfindungsgemäßen Beleuchtungsvorrichtung vorgesehen. Diese Kamera bietet die Möglichkeit, das Beleuchtungsfeld variabel einzustellen und damit an verschiedene Anforderungen und Umgebungsbedingungen anzupassen.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische Schnittdarstellung einer Kamera mit einer Beleuchtungsvorrichtung;
- Fig. 2: eine schematische Schnittdarstellung einer einstellbaren Beleuchtungsvorrichtung mit Lichtführung durch Totalreflexion;
- Fig. 3a: eine schematische Darstellung einer Ausführungsform eines Strahlformungselements der Beleuchtungsvorrichtung mit gegeneinander beweglichen Mikrolinsenfeldern in einem Ausgangszustand;
- Fig. 3b: eine schematische Darstellung des Strahlformungselements gemäß Figur 3a in einem lateral verschobenen Zustand;
- Fig. 4a: eine schematische Darstellung einer weiteren Ausführungsform eines Strahlformungselements der Beleuchtungsvorrichtung mit einem elastisch verformbaren Mikrolinsenfeld in einem entlasteten Zustand; und
- Fig. 4b: eine schematische Darstellung des Strahlformungselements gemäß Figur 4a in einem zusammengepressten Zustand.

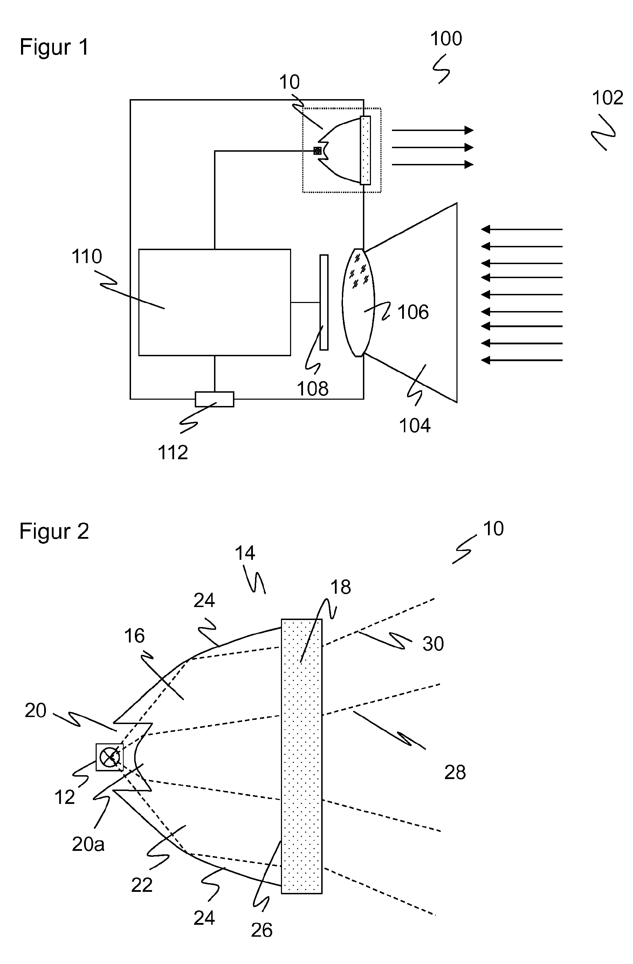

Figur 1 zeigt eine schematische Schnittdarstellung einer Kamera 10. Die Kamera 100 kann beispielsweise zur Vermessung oder Inspektion von Objekten sowie zum Erfassen von Codes und Auslesen von deren Inhalt eingesetzt werden. Die Kamera 100 ist mit einer Beleuchtungsvorrichtung 10 zum Ausleuchten eines Aufnahmebereichs 102 der Kamera 100 ausgerüstet, deren Aufbau weiter unten näher erläutert wird.

Die Kamera 100 erfasst Licht aus einem Aufnahmebereich 102 durch ein Aufnahmeobjektiv 104, in dem nur eine dargestellte Linse 106 die Aufnahmeoptik repräsentiert. Ein Bildsensor 108, beispielsweise ein CCD- oder CMOS-Chip mit einer Vielzahl von zu einer Zeile oder einer Matrix angeordneten Pixelelementen, erzeugt Bilddaten des Aufnahmebereichs 102 und der dort gegebenenfalls vorhandenen Objekte und Codebereiche und gibt diese an eine Auswertungseinheit 110 weiter. Die Auswertungseinheit 110 ist auf einem oder mehreren digitalen Bausteinen implementiert, beispielsweise Mikroprozessoren, ASICs, FPGAs oder dergleichen, die auch ganz oder teilweise außerhalb der Kamera 100 vorgesehen sein können, und steuert zugleich die Beleuchtungsvorrichtung 10.

Die Bilddaten werden in der Auswertungseinheit 110 verarbeitet, beispielsweise vorbereitend gefiltert, geglättet, helligkeitsnormiert, auf bestimmte Bereiche zugeschnitten oder binarisiert. Dann werden interessante Strukturen erkannt und segmentiert, beispielsweise einzelne Objekte, Linien oder Codebereiche. Diese Strukturen werden vermessen oder auf bestimmte Eigenschaften hin überprüft. Sofern Codes gelesen werden sollen, werden diese identifiziert und decodiert, also die in den Codes enthaltene Information ausgelesen.

An einem Ausgang 112 der Kamera 100 können Daten ausgegeben werden, und zwar sowohl Auswertungsergebnisse, wie gelesene Codeinformationen oder ermittelte Abmessungen und Inspektionsergebnisse, als auch Daten in verschiedenen Verarbeitungsstufen, wie Rohbilddaten, vorverarbeitete Bilddaten, identifizierte Objekte oder noch nicht decodierte Codebilddaten.

Figur 2 zeigt die einstellbare Beleuchtungsvorrichtung 10 in einer schematischen Schnittdarstellung. Eine Lichtquelle 12, beispielsweise eine LED, strahlt Licht in einem vergleichsweise großen Winkelbereich ab. Eine zugehörige Beleuchtungsoptik 14 weist ein strahlführendes Element, dargestellt beispielhaft als TIR-Linse 16, und ein nachgeordnetes, hier rein schematisch gezeigtes refraktives oder diffraktives Strahlformungselement 18 auf. Die TIR-Linse 16 umfasst einen Lichteintrittsbereich 20, einen Lichtführungsbereich 22 mit einer Mantelfläche 24 und einen Lichtaustrittsbereich 26, an dem das Strahlformungselement 18 angeordnet ist.

In der TIR-Linse 16 ist in dem Lichteintrittsbereich 20 eine Ausnehmung vorgesehen. Dadurch gelangt auch seitlich abgestrahltes Licht der Lichtquelle 12 in die TIR-Linse 16. In einem zentralen Bereich 20a ist der Lichteintrittsbereich konvex geformt, um den inneren Teil 28 des eintretenden Lichts zu bündeln. Der Lichtaustrittsbereich 26 dagegen ist vorzugsweise flach, wobei eine Strukturierung auf vergleichsweise kleinen Skalen vorgesehen sein kann, wie im Folgenden noch näher erläutert.

Das Licht der Lichtquelle 12 gelangt somit, soweit es nur grob in Richtung der Beleuchtungsoptik abgestrahlt wird, in die TIR-Linse 16. Nach hinten abgestrahltes Licht einer praktisch gänzlich ungerichteten Lichtquelle 12 kann ein zusätzlicher, nicht dargestellter Reflektor in die TIR-Linse 16 zurückwerfen.

In der TIR-Linse 16 gelangt der innere Teil 28 des Lichtbündels, der bereits in die gewünschte Richtung zu dem Beleuchtungsfeld in dem Aufnahmebereich 102 abgestrahlt wurde, direkt zu der Lichtaustrittsfläche 26. Der äußere Teil 30 des Lichtbündels dagegen wird durch Totalreflexion an der Mantelfläche 24 geführt und erreicht somit ebenfalls das gewünschte Beleuchtungsfeld.

Ohne das Strahlformungselement 18 wären das Beleuchtungsfeld sowie die Lichtverteilung innerhalb des Beleuchtungsfeldes starr und durch Lichtquelle 12 sowie TIR-Linse 16 und deren Anordnung fest vorgegeben. Möchte man ein anderes Beleuchtungsfeld beziehungsweise eine andere Lichtverteilung, so müsste man zumindest die TIR-Linse 16 und gegebenenfalls die gesamte Beleuchtungsvorrichtung 10 austauschen. Das einstellbare Strahlformungselement 18 sorgt nun für eine Adaptionsmöglichkeit.

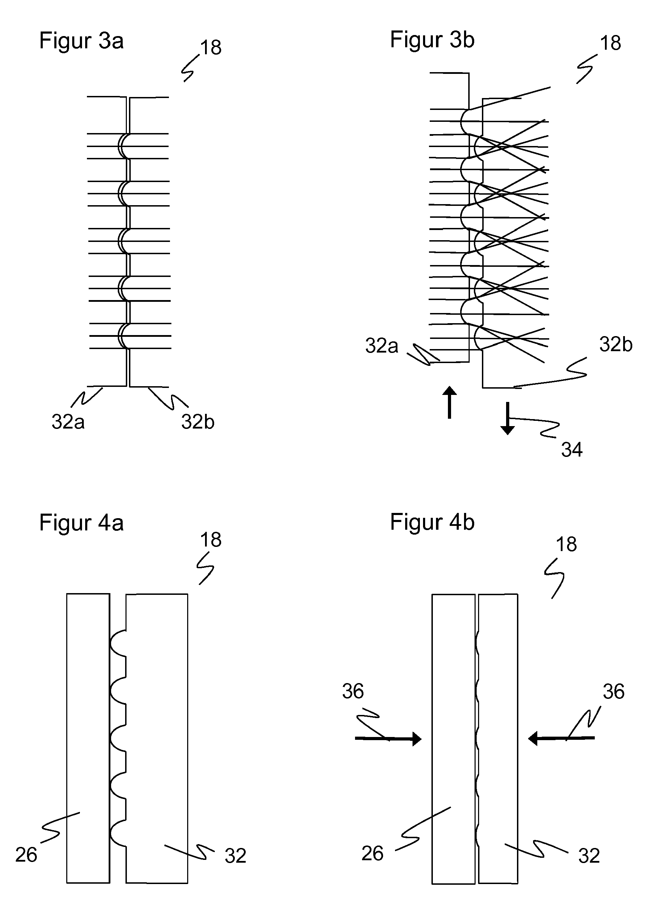

Figur 3 zeigt in einer schematischen Darstellung eine Ausführungsform des Strahlformungselements 18 mit gegeneinander beweglichen Mikrolinsenfeldern 32a-b. Dabei nehmen die Mikrolinsenfelder in Figur 3a eine Ausgangsposition, in Figur 3b dagegen wie durch Pfeile 34 angedeutet eine dazu lateral verschobene Position ein.

In der Ausgangsposition gemäß Figur 3a liegen jeweils zwei Mikrolinsen der beiden Mikrolinsenfelder 32a-b direkt übereinander oder ineinander und haben keinen Einfluss auf die Strahldivergenz. Werden nun die Mikrolinsenfelder 32a-b und damit die Mikrolinsen lateral gegeneinander verschoben, so erhöht sich die Strahldivergenz drastisch, wie in Figur 3b illustriert. Auf diese Weise kann zwischen zwei Zuständen umgeschaltet werden, oder es wird eine Zwischenposition mit entsprechend veränderter Auswirkung auf die Strahldivergenz gewählt. Das Verhalten in diesen Zwischenpositionen führt allerdings nicht unbedingt zu stufenlos einstellbaren Strahlverformungen, sondern ändert sich möglicherweise sprunghaft oder in einer unerwünschten, unerwarteten Weise.

In Figur 3 sind die Mikrolinsen des einen Mikrolinsenfeldes 32a konkav und die Mikrolinsen des anderen Mikrolinsenfeldes 32b konvex. Dadurch können die Mikrolinsen in der Ausgangsposition passgenau ineinandergeschoben werden. Das ist nur ein vorteilhaftes Beispiel, denn eine gleichsam neutrale Ausgangsposition des Strahlformungselements 18 ohne Einfluss auf die Lichtverteilung und Strahldivergenz ist nicht zwingend erforderlich. Wichtig ist nur, dass sich die Strahlformungseigenschaften bei gegenseitigem lateralen Verschieben der Mikrolinsenfelder verändern.

Besonders einfach kann das Strahlformungselement 18 gebildet werden, wenn eines der Mikrolinsenfelder 32a unmittelbar mit dem Lichtaustrittsbereich 26 verbunden und nur das andere Mikrolinsenfeld 32b beweglich ist. Eine besonders einfache Herstellung wird erreicht, wenn das Mikrolinsenfeld 32a einstückig mit der TIR-Linse 16 in dem Lichtaustrittsbereich 26 ausgebildet ist.

Figur 4 zeigt in einer schematischen Darstellung eine weitere Ausführungsform des Strahlformungselements 18 mit einem elastisch verformbaren Mikrolinsenfeld 32. Figur 4a zeigt einen Zustand, in dem die Mikrolinsen entlastet sind, während in Figur 4a die Mikrolinsen plattgedrückt werden.

In dieser Ausführungsform ist der Lichtaustrittsbereich 26 plan ausgebildet. Das hyperelastische Mikrolinsenfeld 32 wird durch Kraftausübung in der mit Pfeilen 36 bezeichneten senkrechten Richtung in einstellbarem Maß verformt. Dadurch verändern sich die optischen Eigenschaften der Mikrolinsen, insbesondere die Brennweite. So ist in der Position gemäß Figur 4a die Brennweite maximal, während in der Position gemäß Figur 4b die Mikrolinsen optisch nahezu wirkungslos werden. Dadurch verringert sich die Strahldivergenz entsprechend. Die Strahlformungseigenschaften können durch Zwischenpositionen stufenlos eingestellt werden.

Die Anordnung gemäß Figur 4 kann auch umgekehrt werden, indem ein elastisches Mikrolinsenfeld mit dann vorzugsweise konkaven Mikrolinsen mit dem Lichtaustrittsbereich 26 verbunden oder einstückig ausgebildet wird und ein planes Druckelement verformend darauf einwirkt.

Es ist weiter vorstellbar, anstelle der gegeneinander beweglichen oder elastischen refraktiven Mikrolinsenfelder mindestens ein diffraktives optische Element (DOE) einzusetzen.

Die mechanische Krafteinwirkung für das laterale Verschieben gemäß Figur 3 oder das Verformen gemäß Figur 4 kann durch beliebige bekannte Aktoriken erreicht werden, beispielsweise einen manuellen Schraubmechanismus sowie elektromagnetische oder piezoelektrische Antriebe und künstliche Muskeln.

## Patentansprüche

1. Beleuchtungsvorrichtung (10) zum Erzeugen eines Beleuchtungsfeldes (102) für einen optoelektronischen Sensor (100), die mindestens eine Lichtquelle (12) und eine Beleuchtungsoptik (14) aufweist, insbesondere mit einer TIR-Linse (16), um das Licht der Lichtquelle (12) gezielt in das Beleuchtungsfeld (102) zu führen, wobei die Beleuchtungsoptik (10) einen Lichteintrittsbereich (20), einen Lichtführungsbereich (22) mit einer Mantelfläche (24) und einen Lichtaustrittsbereich (26) aufweist, so dass das Licht (28, 30) der Lichtquelle (12) in der Beleuchtungsoptik (14) über Totalreflexion an der Mantelfläche (24) von dem Lichteintrittsbereich (20) zu dem Lichtaustrittsbereich (26) geführt wird,
**dadurch gekennzeichnet,**
**dass** die Beleuchtungsoptik (10) an dem Lichtaustrittsbereich (26) ein anpassbares optisches Strahlformungselement (18) aufweist, um die Lichtverteilung des abgestrahlten Lichts (28, 30) einzustellen, wobei das Strahlformungselement (18) mindestens ein elastisches Mikrolinsenfeld (32) mit elastisch verformbaren Mikrolinsen und ein Druckelement (26) aufweist, um die Mikrolinsen zusammenzupressen oder zu entlasten.

2. Beleuchtungsvorrichtung (10) nach Anspruch 1,
wobei der Lichteintrittsbereich (20) eine Ausnehmung aufweist, in der die Lichtquelle (12) angeordnet ist.

3. Beleuchtungsvorrichtung (10) nach Anspruch 1 oder 2,
wobei der Lichteintrittsbereich (20, 20a) zumindest teilweise konvex ausgebildet ist.

4. Beleuchtungsvorrichtung (10) nach einem der vorhergehenden Ansprüche,
wobei das Strahlformungselement (18) mindestens zwei lateral zueinander relativ bewegliche Mikrolinsenfelder(32a-b) aufweist.

5. Beleuchtungsvorrichtung (10) nach Anspruch 4,
wobei in einer lateralen Anordnung der Mikrolinsenfelder (32a-b) die Mikrolinsen des einen Mikrolinsenfeldes (32a) und die Mikrolinsen des anderen Mikrolinsenfeldes (32b) unmittelbar übereinander liegen.

6. Beleuchtungsvorrichtung (10) nach Anspruch 4 oder 5,
wobei in einer weiteren lateralen Anordnung der Mikrolinsenfelder (32a-b) die Mikrolinsen des einen Mikrolinsenfeldes (32a) und die Mikrolinsen des anderen Mikrolinsenfeldes (32b) versetzt zueinander liegen.

7. Beleuchtungsvorrichtung (10) nach einem der Ansprüche 4 bis 6,
wobei ein Mikrolinsenfeld (32a) konkave Mikrolinsen und ein anderes Mikrolinsenfeld (32b) konvexe Mikrolinsen aufweist.

8. Beleuchtungsvorrichtung (10) nach einem der Ansprüche 4 bis 7,
wobei ein Mikrolinsenfeld (32a) ortsfest zu dem Lichtaustrittsbereich (16) angeordnet und insbesondere einstückig damit ausgebildet ist.

9. Beleuchtungsvorrichtung (10) nach einem der vorhergehenden Ansprüche,
wobei das Strahlformungselement (18) ein diffraktives optisches Element aufweist.

10. Kamera (100), insbesondere kamerabasierter Codeleser oder Kamera zur Inspektion oder Vermessung von Objekten, mit einem Bildsensor (108) zur Aufnahme von Bilddaten, einer Auswertungseinheit (110) zum Lesen von Codes oder Bestimmen von Objekteigenschaften aus den Bilddaten und einer Beleuchtungsvorrichtung (10) nach einem der vorhergehenden Ansprüche.

11. Verfahren zum Erzeugen eines Beleuchtungsfeldes (102) für einen optoelektronischen Sensor (100), wobei das Licht einer Lichtquelle (12) in einer Beleuchtungsoptik (14), insbesondere mit einer TIR-Linse (16), von einem Lichteintrittsbereich (20) durch Totalreflexion an einer Mantelfläche (24) eines Lichtführungsbereichs (22) zu einem Lichtaustrittsbereich (26) geführt wird,
**dadurch gekennzeichnet,**
**dass** mit Hilfe eines anpassbaren optischen Strahlformungselements (18) an dem Lichtaustrittsbereich (26) die Lichtverteilung des abgestrahlten Lichts (28, 30) eingestellt wird.
